# EUROPÄISCHE PATENTSCHRIFT

(11) **EP 0 867 116 B1**
(45) Veröffentlichungstag und Bekanntmachung des Hinweises auf die Patenterteilung: **19.12.2001**
(21) Anmeldenummer: 98102953.1
(22) Anmeldetag: 20.02.1998
(51) Int. Cl.: A21D 8/02, A21D 10/00

(54) **Verfahren zur Herstellung granulierter Backmittel**
Process for the preparation of granular baking agents
Production d'un agent améliorant granulaire pour la cuisson

(30) Priorität: 28.02.1997 DE 19708165
(43) Veröffentlichungstag der Anmeldung: 30.09.1998
(73) Patentinhaber: Cognis Deutschland GmbH, 40589 Düsseldorf (DE); UNILEVER N.V., 3013 AL Rotterdam (NL)
(72) Erfinder: Horlacher, Peter, Dr., 88477 Schwendi (DE); Sander, Andreas, Dr., 89257 Illertissen (DE); Adams, Wolfgang, 88074 Meckenbeuren (DE); Gölitz, Hartmut, 87787 Wolfertsschwenden (DE); Funke, Andreas, 89165 Dietenheim (DE); Kniel, Bärbel, Prof., 89231 Neu-Ulm (DE); Rochau, Bernd, Dr., 89231 Neu-Ulm (DE); Geywitz, Peter, Dr., 89079 Ulm (DE)
(74) Vertreter: Jorritsma, Ruurd

(56) Entgegenhaltungen:
- EP-A- 0 650 669
- EP-A- 0 676 142
- FR-A- 2 315 852
- FR-A- 2 698 761

## Beschreibung

Die Erfindung betrifft ein Granulierverfahren zur Herstellung stückiger Backmittel.

### Stand der Technik

Bei der Herstellung von Backwaren werden heutzutage oftmals Mischungen von Backzutaten verwendet, die meist als Halbfabrikate einem anderen Stoffgemisch zugeführt und dann weiterverarbeitet werden. Derartige Backmittel erleichtern die Arbeit und führen zu einer höheren Produktionssicherheit, da die jeweiligen Wiege- und Mischarbeiten entfallen.

Bei Backmitteln wird nach der Dosiermenge unterschieden zwischen sogenannten klassischen Backmitteln (0,2 bis 10 Gew.-% bezogen auf Mehl), Vormischungen ("Premix" mit 10 bis 50 Gew.-% bezogen auf Mehl) und Fertig- oder Komplettmischungen. Während die Vor- und Fertigmischungen nur als Feststoffe gehandelt werden, sind bei den klassischen Backmitteln auch pastöse Produkte im Handel, die jedoch Nachteile in der Handhabung und der Haltbarkeit zeigen, und daher weniger bevorzugt sind.

Die pulverförmigen Zubereitungen werden üblicherweise in großen Gebinden gelagert, aus denen die erforderlichen Mengen jeweils entnommen werden können. Sie umfassen im allgemeinen Grobstoffe, die beispielsweise partikelartig und insbesondere körnig oder stückig sein können, sowie Feinstoffe und Zutaten, die u.a. die Verarbeitungsfähigkeit des herzustellenden Endproduktes fördern, die Haltbarkeit der Backwaren verbessern, die Geschmacksvielfalt erweitern. Wegen der zum Teil sehr unterschiedlichen Teilchengröße und des sehr unterschiedlichen spezifischen Gewichtes der einzelnen Bestandteile der Mischung kann es jedoch leicht zu einer Entmischung der Grob- und der Feinstoffe bzw. Zutaten kommen. Beispielsweise können sich Feinstoffe mit sehr kleinen Partikelgrößen oder einem hohen spezifischen Gewicht im Bevorratungsbehältnis unten ablagern, wogegen Bestandteile mit geringem spezifischen Gewicht eher im oberen Bereich des Behältnisses zu finden sein werden. Es ist sofort klar, daß eine genaue Dosierung von Grobstoffen und Feinstoffen bzw. Zutaten eines aus der Mischung bestehenden und zumindest teilweise entmischten Backmittels nicht oder zumindest nur noch eingeschränkt möglich ist.

In der Praxis hat es daher nicht an Versuchen gemangelt, diesem Problem abzuhelfen. Als einfachste Möglichkeit bietet sich an, die festen Zubereitungen zu vermahlen und ein Pulver mit einer einheitlich geringen Korngröße herzustellen. Dies hat jedoch den Nachteil, daß die Produkte bei der Verarbeitung, insbesondere beim Einfüllen in den Kneter stauben und potentiell allergene Stoffe, wie z.B. Mehl und vor allem Enzyme, in die Raumluft gelangen. Insbesondere lungengängige Stäube mit einer Partikelgröße < 10 µm können bei häufigem Kontakt zu Atemwegserkrankungen ("Bäckerasthma") führen. So sind Feinstäube von Mehlen, Enzympräparaten, Malz- und Sojaerzeugnissen dafür bekannt, daß sie Inhalationsallergien bei entsprechend disponierten Personen auslösen können.

Eine bekannte und praktizierte Maßnahme zur Entstaubung von Backmitteln besteht darin, während der Herstellung der Pulver die Stäube durch Zugabe von Fetten oder Lecithinen zu binden. Die Produkte weisen aber andererseits wieder den Nachteil auf, daß sie nicht ausreichend riesel-, dosier- und silierfähig sind. Diese Lösung ist also nicht zufriedenstellend.

Aus der Patentschrift **US 5,350,585** (Wenger) ist ein Verfahren zur Herstellung von pastösen Backmitteln bekannt, bei dem man Zubereitungen mit einem Wassergehalt im Bereich von 20 bis 35 Gew.-% für 10 bis 45 s bei einer Temperatur unterhalb von 120°C durch einen Extruder schickt und die Extrudate anschließend abtrocknet. Dieses Verfahren ist jedoch aus ökonomischer Sicht unvorteilhaft, da man die Zubereitungen zunächst mit Wasser vermischt und dieses dann unter hohem Aufwand an Zeit und Energie wieder entfernt. Bei dieser Temperatur wird auch ein Teil der Wirkstoffe, wie z.B. Enzyme, Oxidationsmittel usw. zerstört. Ein ähnliches Verfahren, bei dem man Backzubereitungen mit einem Wassergehalt im Bereich von 30 bis 70 Gew.-% extrudiert, ist Gegenstand der deutschen Offenlegungsschrift **DE-A1 4106483** (Werner & Pfleiderer). In gleicher Weise wird in der französischen Patentanmeldung **FR-A1 2676008** (Willm) vorgeschlagen, gequollene Körner mit Hilfe eines Extruders zu einer wäßrigen Paste zu verarbeiten. Aus der Patentschrift **US 3,613,603** (Bakery Speciality Machiner) sowie der russischen Patentanmeldung **SU-A3 1837778** sind Extrusionsverfahren zur Herstellung von Teig bekannt. Desweiteren ist aus der deutschen Offenlegungsschriftt **DE-OS 2219675** ein Verfahren zu Mischung von Fetten durch Extrusion beschrieben. Die deutsche Patentanmeldung **DE 3209432 A1** behandelt die Extrusion von Weizenmehl und/oder Weizengrieß zur Bereitung von Fertigmischungen für Brandmassen als Ersatz für das sonst übliche Röstverfahren. In der **EP 0235601 B1** (Nexus ApS) ist ein Verfahren zur Extrusion einer geschmacksregulierenden Komponente auf Basis von Roggenmehlen beschrieben, das durch eine Extrusionstemperatur von 180 bis 240 °C gekennzeichnet ist. Desweiteren sind in der Europäischen Patentanmeldung **EP 0650669 A1** (Gist-Brocades) Backmittel beschrieben, die u.a. durch Extrusion hergestellt werden können.

Die Aufgabe der Erfindung hat somit darin bestanden, ausgehend von wasserfreien oder praktisch wasserfreien Rohstoffen ein Verfahren zur Herstellung von Backmitteln zur Verfügung zu stellen, das sich dadurch auszeichnet, daß die Backmittel in fester Form vorliegen, eine enge Komgrößenverteilung aufweisen, nicht stauben, nicht klumpen, ausreichend lagerstabil sind und im Vergleich mit Handelsprodukten zumindest gleichwertige anwendungstechnische Eigenschaften aufweisen, sich insbesondere leicht im Teig lösen. Zudem sollte das Verfahren die Möglichkeit mitbeinhalten, temperaturlabile Komponenten, wie beispielsweise Enzyme, Oxidationsmittel, Kohlenhydrate, Reduktionsmittel, Kleber und dergleichen direkt mitzuverwenden.

### Beschreibung der Erfindung

Gegenstand der Erfindung ist ein Verfahren zur Herstellung granulierter Backmittel, bei dem man wasserfreie bzw. praktisch wasserfreie Backrohstoffe, enthaltend Mehl- bzw. kohlenhydrathaltige Rohstoffe, Emulgatoren, und Enzyme durch gleichzeitige Vermischung und Extrusion bei 15 bis 60 °C in stückige Zubereitungen überführt. Vorzugsweise weisen diese eine Teilchengrößenverteilung im Bereich von 0,5 bis 5 mm auf.

Überraschenderweise wurde gefunden, daß die nach dem erfindungsgemäßen Verfahren erhältlichen granularen Backmittel nicht nur eine sehr homogene Größenverteilung zeigen und praktisch staubfrei sind, sondern auch hinsichtlich Lagerstabilität, Wasseraufnahmevermögen, Rieselfähigkeit und insbesondere der anwendungstechnischen Eigenschaften wie beispielsweise der Löslichkeit im Teig, mindestens ebenso gut sind wie vergleichbare pulverförmige Produkte des Handels. Die Erfindung schließt die Erkenntnis ein, daß das Extrusionsverfahren auch die Mitverwendung von temperatur-labilen Stoffen ermöglicht, so daß ein nachträgliches Zudosieren nicht mehr erforderlich ist.

### Backrohstoffe

In den erfindungsgemäßen Backmitteln können weiterhin Backrohstoffe enthalten sein, die ausgewählt sind aus der Gruppe, die gebildet wird von Klebern, Oxidationsmitteln, proteinhaltigen Rohstoffen, Malzstoffen, Hefenahrung, Sojaerzeugnissen, Stärken, Verdickungsmitteln, Hydrokolloiden, Salzen, Säuren, pflanzlichen und tierischen Fetten, Füll-, Trenn- und Sprengmitteln, Lösungs- und Netzmitteln und/oder Konservierungsstoffen.

Beispiele für geeignete **Emulgatoren**, die man typisch in Mengen von 0,05 bis 50, vorzugsweise 0,1 bis 30, insbesondere 2 bis 15 Gew.-% einsetzt, sind:
(a) Ester der Diacetylweinsäure mit Fettalkoholen mit 6 bis 22, vorzugsweise 12 bis 18 Kohlenstoffatomen, wie beispielsweise Diacetylweinsäurecetearylester, aber auch gemischte Ester der Wein- und Essigsäure;
(b) Acyllactate in Form ihrer Alkali- und/oder Erdalkalisalze, wie beispielsweise Natrium- oder Calciumstearoyllactylat,
(c) Polysorbate, also Anlagerungsprodukte von 1 bis 20 Mol Ethylenoxid an Sorbitanmono-, -sesqui-,-di-, und/oder -triester auf Basis von Fettsäuren mit 6 bis 22, vorzugsweise 12 bis 18 Kohlenstoffatomen, wie beispielsweise Addukte von 5 bis 15 Mol Ethylenoxid an Sorbitanmonolaurat, Sorbitandipalmitat, Sorbitantristearat, Sorbitanmonooleat und dergleichen;
(e) Mono- und Diglyceride sowie deren technische Gemische auf Basis von Fettsäuren mit 6 bis 22, vorzugsweise 12 bis 18 Kohlenstoffatomen, wie beispielsweise Laurinsäuremonoglycerid, Palmitinsäuremonoglycerid, Sterarinsäuremonoglycerid oder Ölsäuremonoglycerid sowie deren Anlagerungsproduke mit 1 bis 20, vorzugsweise 5 bis 10 Mol Ethylenoxid;
(f) Lecithine.

Gebräuchliche **Oxidationsmittel**, die im Sinne der Erfindung typischerweise in Mengen von 0,05 bis 5, vorzugsweise 0,2 bis 1 Gew.-% eingesetzt werden, sind Ascorbinsäure, Azodicarbonamid, Cystein, Cystin, Glutathion, Bromate, lodate und dergleichen. Als **Enzyme** können z.B. Lipasen, Amylasen, Hemicellulasen (z.B. Pentosanasen, Cellulasen, Pektinasen), Proteasen, Galactomannasen, Oxidoreductasen und/oder Glucoseoxidasen eingesetzt werden, wobei sich deren Einsatzmenge, beispielsweise 0,01 bis 5 Gew.-%, nach deren Aktivität richtet. Femer können die Backmittel **Kohlenhydrate** (z.B. Sac-charose, Glucose, Fructose, Lactose, Dextrine, Maltodextrine, Zuckeralkohole), Malzstoffe (z.B. Malz-mehle, Malzextrakte), Hefenahrung, Sojaerzeugnisse (z.B. Sojamehle, Sojaproteine), Stärken (z.B. Weizenstärke, Maisstärke, Kartoffelstärke), **Verdickungsmittel** und Hydrokolloide (z.B. Guarkemmehl, Getreidequellmehle, Johannisbrotkernmehl, CMC, Xanthan, Alginat etc.), **Milcherzeugnisse** (z.B. Magermilchpulver, Vollmilchpulver, Molkenpulver, Caseine), **Salze** (z.B. Acetate, Citrate, Carbonate, Sul-fate, Phosphate) **Säuren** (z.B. Milchsäure, Citronensäure, Weinsäure, Äpfelsäure, Essigsäure), pflanz-liche und tierische **Fette, Füll-, Trenn- und Sprengmittel** (z.B. Magnesiumoxid, mikrokristalline Cellulose, Methylcellulose, Calciumstearate, Polyglycole, Kieselsäure), **Lösungs- und Netzmittel** (z.B. Polyethylenglycolmonostearat, Saccharosemonopalmitat und -stearat, Cetylalkohol, Fettalkoholsulfate), **Konservierungsstoffe** (z.B. Sorbate, Propionate) enthalten.

Typische Rohstoffmischungen für die Herstellung der Backmittel nach dem erfindungsgemäßen Verfahren weisen daher folgende Zusammensetzung auf:
(a) 1 bis 90, vorzugsweise 20 bis 80 und insbesondere 30 bis 50 Gew.-% Mehl bzw. kohlenhydrathaltige Rohstoffe (z.B. Weizen, Roggen, Malz, Guar, Hydrokolloide, Zucker, Dextrose oder Saccharose)
(b) 0,05 bis 50, vorzugsweise 0,1 bis 30, insbesondere 2 bis 15 Gew.-% Emulgatoren,
(c) 5 bis 40, vorzugsweise 1 bis 20, proteinhaltige Rohstoffe (z.B. Weizenkleber oder Soja),
(d) 0,01 bis 5, vorzugsweise 0,5 bis 2 Gew.-% Enzyme,
(e) 0,05 bis 5, vorzugsweise 0,2 bis 1 Gew.-% Oxidationsmittel,
(f) 0,05 bis 5, vorzugsweise 0,5 bis 1 Gew.-% Konservierungsmittel,
(g) 0 bis 25, vorzugsweise 3 bis 15 Gew.-% Lösungs- und/oder Netzmittel,
(h) 0 bis 35, vorzugsweise 5 bis 25 Gew.-% Milcherzeugnisse,
(i) 0 bis 20, vorzugsweise 2 bis 15 Gew.-% pflanzlicher und/oder tierischer Fette,
(j) 0 bis 10, vorzugsweise 1bis 5 Gew.-% Säuren,
(k) 0 bis 20, vorzugsweise 3 bis 12 Gew.-% Füll-, Trenn- und Sprengmittel,
sowie gegebenenfalls weitere Hilfs- und Zusatzstoffe, mit der Maßgabe, daß sich die Gewichtsanteile zu 100 Gew.-% ergänzen.

### Extruder

Unter Extrusion ist im Sinne der Erfindung ein Verfahren zum Strangpressen zu verstehen. Die Extrusion wird in Bauteilen durchgeführt, die als Kolben- oder vorzugsweise als Schneckenextruder mit einer oder mehreren Schnecken ausgelegt sind, welche gleich- oder gegensinning drehen können. Üblicherweise wird der Extruder mit der wasserfreien oder praktisch wasserfreien Mischung der Backrohstoffe über einen Einfülltrichter beschickt. Unter dem Begriff "praktisch wasserfrei" ist zu verstehen, daß die Ausgangsstoffe eine Restfeuchte von weniger als 20, vorzugsweise weniger als 10 Gew.-% aufweisen. Weiterhin ist es auch möglich, nur Teile des Backmittels vorab zu mischen und die restlichen Bestandteile direkt in den Extruder zu dosieren. Ebenso kann man die Mischung im Extruder selbst herstellen, also die Komponenten einzeln einfüllen. Das Material wird dabei vorzugsweise nicht über eine Temperatur von 60, insbesondere nicht über 55°C erwärmt, um eine Zersetzung temperaturiabiler Inhaltsstoffe zu vermeiden. Typischerweise liegt die Temperatur bei 15 bis 50°C und kann durch externe Kühlung kontrolliert werden, die Rotationsgeschwindigkeit liegt typischerweise bei 50 bis 150, vorzugsweise 75 bis 100 UpM und die Dosierung bei 10 bis 50, vorzugsweise 15 bis 30 kg/h. Typischerweise wird die Extrusion bei Drücken von 0 bis 80 bar durchgeführt, vorzugsweise bei 0 bis 25 bar. Die Verweilzeit des Materials im Extruder beträgt von 10 Sekunden bis zu 5 Minuten. Das plastifizierte Material wird schließlich durch eine formgebende Düse (Durchmesser der Bohrungen 0,5 bis 5 mm) gepreßt und die Stränge anschließend in stückige, d.h. granulare Form gebracht. Falls gewünscht, können dem Extruder noch Verrunder nachgeschaltet werden. Eine Trocknung der Granulate ist in aller Regel nicht erforderlich.

### Beispiele

### Beispiel 1

In einem Extruder mit gleichsinnig laufender Doppelschnecke und einem Schneckendurchmesser von 40 mm (ZSK 40, Werner & Pfleiderer GmbH, Stuttgart) und einer effektiven Verfahrenslänge von 28 D (D= Schneckendurchmesser) wurde eine Mischung gemäß Tabelle 1 extrudiert:

**Tabelle 1**

| **Backmischung** | | |
|---|---|---|
| **Zusammensetzung** | **Bezeichnung** | **Anteil [Gew.-%]** |
| Lamegin® DW 8000 | Diacetylweinsäurester | 10,00 |
| Nutrilife® CS 16 | Enzym | 0,60 |
| Nutrilife® AM 17 | Enzym | 0,03 |
| Ascorbinsäure | | 0,20 |
| Dextrose | | 20,00 |
| Mehl | | ad 100 |

Die Extrusion wurde bei 50°C mit einer Rotorgeschwindigkeit von 75 UpM und einer Dosierung von 20 kg/h und einem Druck von 1 bar durchgeführt. Die Düse wies Lochöffnungen von 1 mm im Durchmesser auf. Es wurde ein granulares, staubfreies Backmittel erhalten.

### Vergleichsbeispiel V1

Eine Zusammensetzung gemäß Tabelle 1 wurde in einem Mischer der Firma Lödige homogenisiert. Es wurde ein pulvriges, stark staubendes Backmittel erhalten.

### Anwendungstechnische Prüfung

Jeweils 60 g der nach den Beispielen 1 und V1 erhaltenen Backmittel wurden zusammen mit 2000 g Mehl, 40 g Salz, 100 g Hefe und 1160 ml Wasser zu Schrippen verarbeitet. Der Teig wurde 6 min bei einer Teigtemperatur von 26 bis 28°C in einem Kemper Spiralkneter geknetet. Nach einer Teigruhe von 8 min erfolgte die Pressengare mit 12 min. Beurteilt wurde das Volumen der Schrippen nach der Endgare, wobei zum einen eine Normalgare (NG) mit 25 min und zum anderen eine Übergare (ÜG) mit 35 min durchgeführt wurde. In beiden Fällen wurden Volumina im Bereich von 4400 bis 4500 ml (NG) bzw. 4700 bis 4900 ml (ÜG) erhalten. Dies zeigt, daß mit den erfindungsgemäßen extrudierten Backmitteln die gleichen Ergebnisse erzielt werden wie mit den Produkten des Stands der Technik.

## Patentansprüche

1. Verfahren zur Herstellung granulierter Backmittel, bei dem man Mischungen, enthaltend Mehl oder kohlenhydrathaltige Rohstoffe, Emulgatoren und Enzyme mit einem Wassergehalt von weniger als 20 Gew.-% durch gleichzeitige Vermischung und Extrusion bei Temperaturen im Bereich von 15 bis 60 °C in stückige Zubereitungen überführt.

2. Verfahren nach Anspruch 1, **dadurch gekennzeichnet, dass** man Backrohstoffe einsetzt, die weiterhin Kleber, Malzstoffe, Hefenahrung, Sojaerzeugnisse, Stärken, Verdickungsmittel, Hydrokolloide, Salze, Säuren, pflanzliche und tierische Fette, Füll-, Trenn- und Sprengmittel, Lösungs- und Netzmittel oder Konservierungsstoffe enthalten.

3. Verfahren nach den Ansprüchen 1 und/oder 2, **dadurch gekennzeichnet, dass** man Backrohstoffe einsetzt, die
(a) 1 bis 90 Gew.-% Mehl oder kohlenhydrathaltige Rohstoffe
(b) 0,1 bis 50 Gew.-% Emulgatoren,
(c) 5 bis 40 Gew.-% proteinhaltige Rohstoffe
(d) 0,01 bis 5 Gew.-% Enzyme,
(e) 0,05 bis 5 Gew.-% Oxidationsmittel,
(f) 0,05 bis 5 Gew.-% Konservierungsmittel,
(g) 0 bis 25 Gew.-% Lösungs- und/ oder Netzmittel,
(h) 0 bis 35 Gew.-% Milcherzeugnisse,
(i) 0 bis 20 Gew.-% pflanzlicher und/ oder tierischer Fette,
(j) 0 bis 10 Gew.-% Säuren,
(k) 0 bis 20 Gew.-% Füll-, Trenn- und Sprengmittel,
sowie gegebenenfalls weitere Hilfs- und Zusatzstoffe, mit der Maßgabe enthalten, dass sich die Gewichtsanteile zu 100 Gew.-% ergänzen.

## Claims

1. A process for the production of granulated baking preparations in which mixtures containing flour or carbohydrate-containing raw materials, emulsifiers and enzymes and less than 20% by weight water are converted into particulate preparations by simultaneous mixing and extrusion at temperatures in the range from 15 to 60°C.

2. A process as claimed in claim 1, **characterized in that** baking raw materials additionally containing glutens, malts, yeast nourishment, soya products, starches, thickeners, hydrocolloids, salts, acids, vegetable and animal fats, fillers, release agents and disintegrators, solvents and wetting agents or preservatives are used.

3. A process as claimed in claims 1 and/or 2, **characterized in that** the baking raw materials contain
(a) 1 to 90% by weight flour or carbohydrate-containing raw materials,
(b) 0.1 to 50% by weight emulsifiers,
(c) 5 to 40% by weight protein-containing raw materials,
(d) 0.01 to 5% by weight enzymes,
(e) 0.05 to 5% by weight oxidizing agents,
(f) 0.05 to 5% by weight preservatives,
(g) 0 to 25% by weight solvents and/or wetting agents,
(h) 0 to 35% by weight milk products,
(i) 0 to 20% by weight vegetable and/or animal fats,
(j) 0 to 10% by weight acids,
(k) 0 to 20% by weight fillers, release agents and disintegrators,
and optionally other auxiliaries and additives,
with the proviso that the percentages by weight add up to 100% by weight.

## Revendications

1. Procédé de production d'agent de cuisson granulé dans lequel on convertit des mélanges contenant de la farine ou des matières premières contenant des hydrates de carbone, des agents émulsionnants et des enzymes avec une teneur en eau de moins de 20 % en poids grâce à un mélange et à l'extrusion simultanés, à des températures dans la zone allant de 15 à 60°C en des préparations en morceaux.

2. Procédé selon la revendication 1,
**caractérisé en ce qu'**
on utilise des matières premières de cuisson qui renferment en outre des glutens, des malts, des aliments à base de levure, des produits de soja, des amidons, des agents épaississants, des hydrocolloïdes, des sels, des acides, des matières grasses végétales et animales, des substances de remplissage, de démoulage et d'éclatement, un solvant et un agent mouillant ou des substances de conservation.

3. Procédé selon les revendications 1 et/ou 2,
**caractérisé en ce qu'**
on utilise des matières premières de cuisson qui contiennent :
a) de 1 à 90 % en poids de farine ou de matières premières contenant des hydrates de carbone,
b) de 0,1 à 50 % en poids d'agents émulsionnants ,
c) de 5 à 40 % en poids de matières premières contenant des protéines,
d) de 0,01 à 5 % en poids d'enzymes,
e) de 0,05 à 5 % en poids d'agent d'oxydation,
f) de 0,05 à 5 % en poids d'agent de conservation,
g) de 0 à 25 % en poids de solvant ou d'agent de mouillage,
h) de 0 à 35 % en poids de produits laitiers,
i) de 0 à 20 % en poids de matières grasses végétales et/ou animales,
j) de 0 à 10 % en poids d'acides,
k) de 0 à 20 % en poids d'agents de charge, de démoulage et d'éclatement, ainsi qu'éventuellement d'autres adjuvants et additifs, avec la restriction que les pourcentages en poids se complètent à 100 % en poids.
